# EUROPÄISCHE PATENTSCHRIFT

(11) **EP 2 834 424 B1**
(45) Veröffentlichungstag und Bekanntmachung des Hinweises auf die Patenterteilung: **07.12.2016**
(21) Anmeldenummer: 13718290.3
(22) Anmeldetag: 19.03.2013
(51) Int. Cl.: E02F 5/32, B25D 9/00, E02F 9/22, E04G 23/08, G01L 7/16, E01C 23/00, F15B 21/00, B25D 9/12, F15B 5/00, F15B 20/00, G01L 19/10

(54) **HYDRAULISCHES ANBAUGERÄT**
HYDRAULIC ATTACHMENT
OUTIL PORTÉ HYDRAULIQUE

(30) Priorität: 05.04.2012 DE 102012006933; 20.06.2012 DE 102012012299
(43) Veröffentlichungstag der Anmeldung: 11.02.2015
(73) Patentinhaber: Construction Tools GmbH, 45143 Essen (DE)
(72) Erfinder: PREUSS, Oliver, 44225 Dortmund (DE); LOHMANN, Stefan, 45470 Mülheim (DE); DIRR, Colin, 45527 Hattingen (DE); KNJAZEV, Oleg, 46282 Dorsten (DE); JÄKEL, Martina, 45894 Gelsenkirchen (DE); AUTSCHBACH, Uwe, 46145 Oberhausen (DE); MELLWIG, Markus, 58135 Hagen (DE)
(74) Vertreter: Patentanwälte Vomberg & Schart
(86) Internationale Anmeldenummer: PCT/DE2013/000158
(87) Internationale Veröffentlichungsnummer: WO 2013/149608

(56) Entgegenhaltungen:
- EP-A2- 2 204 502
- WO-A1-2011/077001
- US-A- 6 032 537
- US-A1- 2004 016 586
- US-B1- 6 510 902

## Beschreibung

Die vorliegende Erfindung betrifft ein Hydraulisches Anbaugerät welches ein Bau- oder Abbruchwerkzeug, insbesondere ein Hammer, eine Zange, eine Stahlschere, ein Pulverisierer, ein Greifer, ein Brecherlöffel oder eine Verdichterplatte ist, mit einem Hydraulikkreislauf, das mechanisch mit einem Trägergerät und hydraulisch mit dem Hydrauliksystem des Trägergerätes verbindbar ist.

Hydraulische Anbaugeräte können an einer Vielzahl unterschiedlicher Trägergeräte von den verschiedensten Herstellern angebaut werden. Sowohl beim An- und Abbau als auch beim Umschalten von Funktionsmodi des Anbaugerätes oder Erweitern der Installation (z.B. um eine Permanentschmierpumpe) ist ein Öffnen des Ölkreislaufs regelmäßig notwendig. Hierzu muss der Hydrauliköldruck zuvor auf Umgebungsniveau abgesenkt werden, um ein gefahrloses Öffnen zu ermöglichen.

Das Absenken des Hydraulikdrucks auf Umgebungsniveau ist nur im Zusammenspiel von Trägergerät und Anbaugerät möglich. Aufgrund der Vielzahl von Trägergeräten ist es dem Hersteller von Anbaugeräten nicht möglich, eine einheitliche Aussage über das Absenken des Hydraulikdrucks auf Umgebungsniveau zu treffen und dem Anwender somit pauschal mitzuteilen, wie der Druck abgesenkt werden kann. Vielmehr ist neben der serienmäßig ausgelieferten Standardinstallation des Trägergeräteherstellers die Vorgehensweise stark von der individuellen Hydraulikinstallation des Trägergerätes abhängig und einsatzbereichspezifisch ausgestaltet.

Dem Anwender kann somit weder vom Trägergeräte- noch vom Anbaugerätehersteller eindeutig vorgeschrieben oder beschrieben werden, wie er den Systemdruck in der Gesamtmaschine, die sich aus dem Trägergerät und einem Anbaugerät zusammensetzt, sicher auf Umgebungsdruck absenken kann. Bei ungünstigen Hydraulikinstallationen, wie beispielsweise bei einem Rücklauf über eine freie Ventilsektion des Trägergerätes und keinem direkten Rücklauf zum Tank, kann teilweise mehrere Stunden ein höheres Druckniveau im Kreislauf enthalten sein. Der Anwender hat keine Möglichkeit zu erkennen, ob noch Restdruck im Kreislauf enthalten ist oder nicht. Zusätzlich ist es auch, beispielsweise durch versehentlich geschlossene Absperrventile oder vorzeitig getrennte Schlauchkupplungen möglich, durch Fehlverhalten des Anwenders Restdruck im Anbaugerät einzuschließen, wobei der am Trägergerät gemessene Druck aber bereits auf Umgebungsniveau abgefallen ist. Im Gerät noch vorhandenes, unter hohem Druck stehendes Öl kann dann beim Lösen von Hydraulikleitungen in Form eines Ölstrahls unkontrolliert austreten, was zu Personenschäden und Umweltverschmutzung führen kann.

In der DE 202009007316 U1 wird eine ähnliche Problematik bereits aufgegriffen, worin ein Anbaugerät mit hydraulischer Arbeitsausrüstung für hydraulische Baumaschinen mit Hydraulikschläuchen beschrieben wird, die über Schlauchkupplungen an das Hydrauliksystem der Baumaschine (als Trägerfahrzeug) anschließbar ist. Ferner wird ausgeführt, dass wenn ein Anbaugerät von der hydraulischen Baumaschine abgetrennt wurde und somit die Schlauchkupplungen getrennt wurden, dessen Hydraulikschläuche mit Hydrauliköl gefüllt sind. Im Falle von Sonneneinstrahlung kann sich innerhalb des durch die geschlossenen Schlauchkupplungen geschlossenen Hydraulikkreislaufes des Anbaugerätes ein Überdruck bilden, der vom Anwender nicht erkannt wird. Die Vorrichtung gemäß DE 202009007316 U1 hat es sich zum Ziel gemacht, die Überdruckbildung innerhalb der Hydraulik des Arbeitsgerätes zu vermeiden und schlägt hierzu einen am Anbaugerät angeordneten offenen Hydraulikbehälter mit Schlauchkupplungshälften vor. Nach dem Trennen der Schlauchkupplungen zwischen Trägergerät und Anbaugerät muss der Anwender die anbaugeräteseitigen Schläuche über die Schlauchkupplungshälften an den Hydraulikbehälter anschließen.

Nachteilig an dem bekannten Stand der Technik ist, dass der Druck, der innerhalb eines Anbaugerätes herrscht, nicht vom Anwender festgestellt werden kann, womit ein Öffnen des Hydraulikkreislaufes nicht ohne Risiko möglich ist. Weiterhin ist nachteilig, dass die Druckentlastung nicht in jedem Fall möglich ist, die bekannten Möglichkeiten einen erhöhten Bauraum, Kosten und Wartungsaufwand verursachen und dass Schmutz in den Hydraulikkreislauf eindringenden kann. Die zusätzlichen Bauteile wie Hydraulikbehälter, Schlauchkupplungen, Entlüftung und Ablassventil benötigen einen erheblichen Bauraum, der an vielen Anbaugeräten nicht vorhanden ist. Durch den rauen Einsatz auf Baustellen und in Steinbrüchen sind alle zusätzlich an einem Anbaugerät befestigten Bauteile einem hohen Risiko ausgesetzt, dass sie beschädigt werden. Da bei einem Abkühlen der Ölfüllung des Anbaugerätes Öl aus dem Hydraulikbehälter in das Anbaugerät nachgesaugt wird, besteht die Gefahr dass entweder Luft oder verschmutztes Öl aus dem Hydraulikbehälter in den Hydraulikkreislauf des Anbaugerätes gelangt. Abhängig von der Kapazität des Hydraulikbehälters, muss er regelmäßig entleert werden. Keinen Schutz vor im Anbaugerät verbleibenden Druck bietet die einen Hydraulikbehälter aufweisende Lösung, wenn die Schlauchkupplungen oder Absperrventile zwischen Anbaugerät und Trägergerät, getrennt, bzw. geschlossen werden, wenn noch Druck im Kreislauf vorhanden ist. Da im getrennten Zustand die Schlauchkupplungshälften, bzw. die Absperrventile die jeweilige Leitung hermetisch abdichten, kann kein Öl austreten, der Druck bleibt eingespannt und die Schlauchkupplungshälften lassen sind nicht an die Schlauchkupplungshälften des Hydraulikbehälters anschließen, da eine zu hohe Kraft erforderlich ist, um die Sperrventile der Schlauchkupplungshälften gegen den eingespannten Druck zu öffnen.

Nach US 6,510,902 B1 sind ein Verfahren zur Ermittlung der Betriebsdauer und des Einsatzzustandes eines hydraulischen Schlaggerätes, insbesondere Hydraulikhammers, bekannt. Hierzu ist ein Druckwächter derart mit einer Umsteuerleitung eines Schlagwerkes verbunden, dass die Anzahl von Schlaghüben bestimmt werden kann.

US 2004/0016586 A1 beschreibt ein Bauwerkzeug mit einem hydraulischen Anbaugerät, das mechanisch mit einem Trägergerät und hydraulisch mit dessen Hydraulikkreis verbindbar ist.

Schließlich offenbart US 6,032,537 ein Messgerät zur Bestimmung des Drucks innerhalb einer Hydraulikleitung.

Es ist daher die Aufgabe der vorliegenden Erfindung, ein gefahrloses Öffnen des Hydraulikkreises innerhalb eines Anbaugerätes zu ermöglichen und insbesondere die genannten Nachteile zu beheben. Ferner soll vorzugsweise eine einfache und zuverlässige Möglichkeit geschaffen werden, um feststellen zu können, ob im hydraulischen Kreislauf eines Anbaugerätes ein Restdruck vorhanden ist.

Diese Aufgabe wird durch das hydraulische Anbaugerät nach Anspruch 1 gelöst, das erfindungsgemäß, eine Restdruckanzeige aufweist, die direkt mit dem Hydraulikkreislauf des Anbaugerätes lösbar oder unlösbar verbunden ist, so dass die Restdruckanzeige unabhängig von der Trägergeräteinstallation arbeitet. Hierdurch wird die Möglichkeit geschaffen, das Vorhandensein eines Druckes oberhalb eines Grenzwertes in dem Hydraulikkreislauf des Anbaugerätes anzuzeigen. Die Restdruckanzeige dient als Anzeigeelement, mit dem der Anwender die Möglichkeit hat, beim An- und Abbau sowie beim Umschalten von Funktionsmodi des Anbaugerätes, beim Erweitern der Installation, z.B. um eine Permanentschmierpumpe oder bei Instandhaltungsarbeiten,
zu erkennen, ob sich der Druck soweit abgebaut hat, dass er gefahrlos den Ölkreislauf öffnen kann, womit kostenintensive und unnötige Standzeiten des Anbaugerätes weitestgehend vermieden werden.

Darüber hinaus wird die Gefahr durch eine mögliche Fehlanwendung, wie beispielsweise das Schließen von Absperrventilen oder das Trennen von Schlauchkupplungen bei noch anstehendem hohen Druck, vermieden, weil über das Anzeigeelement der Druck direkt im Anbaugerät gemessen und angezeigt wird. Im Gegensatz zu Druckanzeigen oder Druckmessstellen an dem Trägergerät, ist die Restdruckanzeige direkt, ohne Zwischenschaltung von Schaltventilen, Absperrventilen oder Schlauchkupplungen mit dem Hydraulikkreislauf des Anbaugerätes verbunden und arbeitet unabhängig von der Trägergeräteinstallation, wodurch das Anzeigeergebnis nicht von der Schaltstellung von Ventilen und von dem Kuppelzustand von Schlauchkupplungen beeinflusst wird. Es werden keine weiteren Messinstrumente benötigt. Mir der erfindungsgemäßen Vorrichtung wird das Risiko ausgeräumt, dass bei Wartungs- oder Einstellarbeiten Flüssigkeit unter hohem Druck austreten und Personenschäden verursachen kann.

Bevorzugte Ausführungsformen der vorliegenden Erfindung werden im Folgenden und in den Unteransprüchen beschrieben.

Nach einer ersten bevorzugten Ausführungsform der Erfindung ist vorgesehen, dass die Restdruckanzeige eine direkt arbeitende Vorrichtung ist, vorzugsweise mit einem Mess- und Anzeigekolben, der direkt vom Hydraulikdruck beaufschlagt wird. Ferner ist die Restdruckanzeige vorzugsweise in das Anbaugerät integriert und nur eine Außenfläche der Restdruckanzeige, an der ein Anzeigeelement angeordnet ist, zeigt nach außen. Eine derartige Restdruckanzeige ist robust und daher besonders gut für den Einsatz an hydraulischen Anbaugeräten für die Bau-, Abbruch und Gewinnungsindustrie geeignet, die vorzugsweise als hydraulische Schlagvorrichtung oder hydraulische Abbruchzange ausgestaltet sind. Alternativ zu einem Anzeigekolben kann die lineare Bewegung des Messkolbens auch in eine rotatorische Bewegung eines Anzeigeelementes umgewandelt werden, wie beispielsweise einer sich drehende Scheibe, die zwei unterschiedlich farbige Markierungen aufweist (rot/grün o.ä.). Die vom Hydraulikdruck abhängige lineare Bewegung, welche die Verschiebung eines Anzeigeelementes bewirkt, kann anstelle eines Messkolbens auch über eine Messmembran erzeugt werden.

Vorzugsweise besitzt die Restdruckanzeige einen Grundkörper, der über ein Außengewinde in eine mit einem Innengewinde versehene Aufnahmebohrung eingeschraubt ist, wobei die Aufnahmebohrung in einem Bauteil des hydraulischen Anbaugerätes eingebracht ist. Dabei ist nach einer weiteren bevorzugten Ausführungsform der Erfindung vorgesehen, dass die Restdruckanzeige einen Messkolben mit einer Stange, einem Kolbenbund und einem Anschlagbund aufweist, der Messkolben in einer Bohrung des Grundkörpers angeordnet und gegen die Kraft einer Feder längsaxial innerhalb der Bohrung beweglich ist. Eine derartige Vorrichtung ist unkompliziert an dem Anbaugerät oder in einem Bauteil des Anbaugerätes montierbar und gut vor von außen einwirkenden mechanischen Einflüssen geschützt. Wird die Restdruckanzeige an einem Hydraulikhammer verwendet, so kann sie in dem Schlagwerkgehäuse, an dem das Schlagwerk aufnehmenden Trägergehäuse oder in dem Gehäuse einer hydraulisch angetriebenen Schmierpumpe angeordnet sein, die am Schlagwerkgehäuse oder dem Trägergehäuse befestigt ist.

Nach einer weiteren vorteilhaften Ausgestaltung der Erfindung ist die Bohrung über eine Messbohrung mit dem Hydraulikkreislauf des Anbaugerätes verbunden, so dass der im Hydraulikkreislauf anstehende Druck auf den Messkolben einwirkt. Daher steht die Stange bei zunehmender Druckbeaufschlagung des Messkolbens weiter aus dem Grundkörper hervor und fährt bei Verringerung des Drucks in den Grundkörper zurück. Anhand der aus dem Grundkörper hervorstehenden Länge der Stange kann der Anwender unmittelbar ablesen, ob ein gefahrloses Öffnen des Hydraulikkreislaufes möglich ist. Zur Begrenzung des Verschiebewegs des Messkolbens in zumindest einer Richtung weist der Messkolben einen Anschlagbund auf. Vorzugsweise ist die Restdruckanzeige in dem Schlagwerkgehäuse, insbesondere in dem Zylinder eines Hydraulikhammers eingebaut.

Konkrete Ausführungsformen der vorliegenden Erfindung werden im Folgenden anhand der Figuren erläutert. Es zeigen:
- Fig. 1:: eine schematische Darstellung eines Hydraulikhammers mit einer Schlagvorrichtung,
- Fig. 2:: eine schematische Darstellung einer Abbruchzange und
- Fig. 3:: eine schematische Detailansicht einer Restdruckanzeige.

Druckmittelbetriebene Schlagvorrichtungen, werden in Hydraulikhämmern die insbesondere zum Zerkleinern von Gestein, Beton oder sonstigen Baustoffen dienen und in Bohrhämmern, die zum Bohren von Löchern in Gestein und sonstige Baustoffe dienen eingesetzt und werden in den meisten Fällen als Zusatz- oder Anbaugeräte für Trägergeräte wie beispielsweise Bagger, Lader, Raupenfahrzeugen oder sonstige Bau- und Gewinnungsmaschinen eingesetzt.

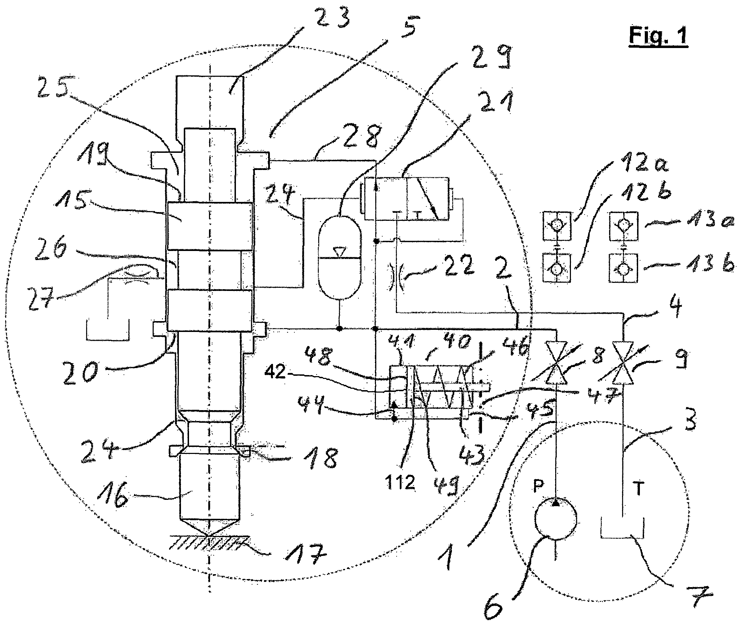

In Fig. 1 ist gezeigt, dass über eine Druckleitung 1, 2 sowie eine Tankleitung 3, 4 das Schlagwerk 5 eines Hydraulikhammers hydraulisch mit der Pumpe 6 bzw. dem Tank 7 eines Trägergerätes, bspw. eines Baggers verbunden ist. Auf dem Bagger befinden sich ein Ventil, mit dem die Leitung 1 zur Pumpe verbunden werden kann, um dem Schlagwerk zum Betrieb Drucköl zuzuführen oder mit dem die Verbindung getrennt wird, um den Betrieb des Schlagwerks zu stoppen. In Fig. 1 ist dieses Ventil nicht dargestellt. In den zum Schlagwerk führenden Leitungen des Baggers befindet sich meistens jeweils ein Absperrventil 8, 9 um ein Austreten von Hydraulikflüssigkeit zu verhindern, wenn die hydraulische Verbindung getrennt wird, um den Hydraulikhammer vom Bagger abzubauen. Anstelle der Absperrventile oder zusätzlich zu den Absperrventilen können Schlauchkupplungen in den Leitungen eingebaut sein, die jeweils aus zwei Kupplungshälften 12a, 12b, bzw. 13a, 13b bestehen, die Sperrventile aufweisen, welche einen Austritt von Hydraulikflüssigkeit verhindern, wenn die Kupplungen getrennt sind. Dargestellt sind die Kupplungen im getrennten Zustand, bei dem die Sperrventile geschlossen sind. Die dargestellten Kupplungen sind separat, nicht an den Hydraulikkreis angeschlossen dargestellt.

Das Schlagwerk besteht aus einem Zylindergehäuse, in dem ein Schlagkolben 15 geführt ist, einem Zylinderdeckel und einem Hammerunterteil, in dem der Meißel 16 bzw. das Einsteckende über Verschleißbuchsen gelagert ist. Dargestellt ist nur die vereinfachte innere Kontur des Zylindergehäuses und des Deckels. Im normalen Betrieb drückt das Trägergerät das Schlagwerk in Richtung des zu bearbeitenden Materials 17, sodass sich das Schlagwerk über den im Gehäuse angeordneten Meißelanschlag 18 an einer Anlagefläche des oberen Meißelendes abstützt und das untere Meißelende gegen das zu bearbeitende Material gedrückt wird.

Im normalen Betrieb schlägt der hydraulisch angetriebene Schlagkolben am Ende jeden Schlaghubs auf das sich im Schlagwerk befindliche Ende des Meißels und überträgt seine kinetische Energie auf den Meißel. Die in den Meißel eingeleitete Energie bewirkt eine hohe Stoßkraft, die vom Meißel auf das Material übertragen wird und seine Zerstörung bewirkt.

Der Schlagkolben 15 ist als Differentialkolben ausgeführt, d. h. er besitzt zwei entgegengerichtete ringförmige Antriebsflächen 19, 20 mit unterschiedlicher Größe. Die untere Antriebsfläche 20, über die bei Druckbeaufschlagung der Rückhub ausgelöst wird, ist ständig mit einem vorgegebenen Betriebsdruck beaufschlagt, der in der Druckleitung 2 während des Betriebs ansteht. Die obere Antriebsfläche 19, über die mittels Druckbeaufschlagung der Schlaghub ausgelöst wird, wird abhängig von der Stellung eines Steuerschiebers 21 mit dem Betriebsdruck beaufschlagt oder zum Tankdruck entlastet. Der Schlaghub ist möglich, da die obere ringförmige Antriebsfläche 19 größer ist als die untere 20, so dass sich bei einer Beaufschlagung beider Flächen mit dem Betriebsdruck eine in Schlagrichtung gerichtete resultierende Kraft ergibt. Der sich bewegende Kolben verdrängt beim sogenannten Schlaghub das von der kleinen, unteren Antriebsfläche verdrängte Öl in Richtung der größeren oberen Antriebsfläche 19 des Kolbens, zu der auch das von der Pumpe 6 kommenden Öl fließt. Beim Rückhub fließt das Öl von der Pumpe 6 ausschließlich in Richtung der flächenkleineren unteren Antriebsfläche 20, wohingegen das Öl von der flächengrößeren, oberen Antriebsfläche 19 über eine Rücklaufdrossel 22, die für einen ruhigen Lauf des Hammers sorgt, zum Tank 7 abgeführt wird.

Das Schlagwerk besitzt noch einen Gasraum 23, nämlich einen unter Gasdruck stehenden Raum, in den die obere Stirnfläche des Kolbens hineinragt. Der Gasdruck in diesem Raum übt auf den Kolben eine in Richtung des Schlaghubes wirkende zusätzliche Kraft aus. Schlagwerke können auch ohne einen Gasspeicher ausgeführt werden. Der am anderen Kolbenende liegende Kolbenteil einschließlich der dortigen Stirn- bzw. Schlagfläche ragt in einen sogenannten Schlagraum 24 herein, der mit der Atmosphäre verbunden ist.

Der bereits eingangs erwähnte Steuerschieber 21, der sich vorzugsweise im Zylinderdeckel des Schlagwerks befindet, verbindet je nach Schaltstellung die flächenmäßig größere obere Antriebsfläche 19 entweder mit der Druckleitung 2, so dass dort der Betriebsdruck anliegt oder entlastet während des Rückhubs diese Fläche über die Tankleitung 4, zum Tank 7.

Auch der Steuerschieber 21 kann ähnlich zum Schlagkolben zwei Antriebsflächen besitzen, wobei eine erste Fläche, die Rückstellfläche, über die Druckleitung konstant mit dem Betriebsdruck beaufschlagt ist und eine dieser entgegengerichte, flächengrößere zweite Fläche, die Steuerfläche, wahlweise mit dem Betriebsdruck beaufschlagt oder zum Tankdruck entlastet wird. Durch die unterschiedliche Größe der beiden Flächen kann der Steuerschieber bei entsprechender Druckbeaufschlagung der Flächen in eine seiner Endlagen verschoben werden.

Die Steuerfläche, ist an eine Umsteuerleitung 24 angeschlossen, die so in den Zylinderraum 25, in dem der Schlagkolben geführt ist einmündet, dass sie abhängig von der Kolbenposition mit dem Betriebsdruck beaufschlagt oder zum Tankdruck entlastet wird. In der unteren Umkehrposition, in der der Schlagkolben im normalen Betriebszustand auf das Werkzeug trifft, wird die Einmündung der Umsteuerleitung 24 über eine zwischen den Antriebsflächen des Schlagkolbens angeordnete Umfangsnut 26 mit einer ebenfalls in den Arbeitszylinder einmündenden Tankleitung 27, in der ein niedriger Druck herrscht, verbunden, wodurch die Steuerfläche des Steuerschiebers zum Tank 7 entlastet wird und der Steuerschieber eine erste Endlage einnimmt (Rückhubposition), da auf der Rückstellfläche des Steuerschiebers der Betriebsruck ansteht und eine entsprechende Rückstellkraft erzeugt. Die Tankleitungen 27 und 4 werden innerhalb des Schlagwerks zusammengeführt und münden in einen gemeinsamen Tank des Trägergerätes, der hier der Übersichtlichkeit halber als zwei Tanks dargestellt ist. In der Rückhubposition verbindet der Steuerschieber über die Wechseldruckleitung 28 die obere Antriebsfläche 19 des Schlagkolbens mit der Tankleitung 4. Aufgrund des auf der unteren Antriebsfläche 20 des Schlagkolbens konstant anstehenden Betriebsdrucks, wird der Schlagkolben entgegen der Schlaghubrichtung nach oben verschoben. Über eine Rücklaufdrossel 22 strömt das von der oberen Kolbenantriebsfläche verdrängte Öl gedrosselt zum Tank, wodurch im Rückhub ein für einen ruhigen Lauf erforderliches Druckniveau auf der oberen Antriebsfläche aufrecht gehalten wird.

Einige Typen von Hydraulikhämmern sind mit einem Hydraulik-Druckspeicher 29 ausgestattet, die zur Speicherung von unter Druck stehendem Hydrauliköl vorgesehen sind und Druckschwankungen reduzieren, die durch zeitlich wechselnde Ölverbräuche des Schlagwerks entstehen.

Nach dem Ausschalten der Hydraulikölversorgung des Schlagwerks, d.h. nach einer Trennung von der Pumpe, wird der noch in dem Schlagwerk anstehende Druck über Leckagen an den Ventilen des Trägergerätes abgebaut, wobei die dafür notwendige Zeit von den Leckagespalten und der Ölviskosität abhängig ist und gerade bei kleinen Spalten und kaltem, zähem Öl sehr lange dauern kann. Gerade wenn das Schlagwerk einen Hydraulik-Druckspeicher 29 aufweist, muss eine größere Menge Öl über Leckagestellen abgebaut werden, bevor der Druck abgebaut ist. Werden vor einem vollständigen Druckabbau die Absperrventile 8 und 9 geschlossen, oder die Schlauchkupplungen 12a, 12b, 13a und 13b getrennt, so ist der Hydraulikkreislauf des Schlagwerks abgesperrt und der Druck bleibt in dem Kreislauf eingespannt.

Um einen solchen noch vorhandenen Druck zu erkennen, ist an die Druckleitung 2 eine Restdruckanzeige 40 angeschlossen. Die Restdruckanzeige 40 besteht aus einem Messzylinder 41 der eine Bohrung aufweist, in den ein Messkolben 42 mit einer Stange 43 und einem Kolbenbund 112 eingebaut ist. Der Kolbenbund unterteilt den Messzylinder in zwei Zylinderkammern, die über Anschlussleitungen 44, 45 an die Druckleitung 2 angeschlossen sind. In der rechts vom Kolbenbund liegenden ringförmigen Zylinderkammer befindet sich eine Feder 46 die den Messkolben und die daran befestigte Stange, bei druckloser Druckleitung und somit drucklosen Zylinderkammern in die Ruhestellung verschiebt. In der Ruhestellung wird die Stange so weit in den Messzylinder zurückgezogen, dass sie nicht über die Bauteiloberfläche des Schlagwerks oder die Bauteiloberfläche des den Messzylinder bildenden Bauteils, welche als Strich-Punkt-Linie 47 dargestellt ist, hinausragt. Der in der Druckleitung herrschende Druck wird über Anschlussleitungen 44 und 45 in die beiden Zylinderkammern geleitet und wirkt gleichermaßen auf die Kreisfläche 48 und die ihr gegenüberliegende Ringfläche 49 des Kolbenbundes. Da die Kreisfläche 48 vom Flächeninhalt größer ist als der Flächeninhalt der Ringfläche, wirkt obwohl die Kräfte entgegengerichtet sind, eine resultierende Differenzkraft, die den Messkolben in Richtung auf die Bauteiloberfläche hin verschiebt. Dieser Verschiebung und der resultierenden Kraft entgegengerichtet ist die durch die Feder erzeugte Kraft. Übersteigt die resultierende Kraft aufgrund des Öldrucks die Kraft der Feder, so verschieben sich der Messkolben und die Stange, die das Anzeigeelement bildet, in Richtung zur Bauteiloberfläche hin, sodass die Stange gegenüber der Bauteiloberfläche sichtbar hervorsteht. Das Hervorstehen und Sichtbarwerden der Stange ist ein Zeichen dafür, dass ein vorgegebenes Druckniveau in dem Hydraulikkreislauf des Schlagwerks überschritten ist und ein gefahrloses Öffnen des Hydraulikkreislaufes nicht möglich ist. Die Abmessungen des Kolbenbundes und die der Stange, sowie die geometrischen Abmessungen der Feder sind so gewählt, dass die Stange dann hervorsteht und sichtbar ist, wenn ein kritisches Druckniveau überschritten ist und ein gefahrloses Öffnen des Hydraulikkreislaufes nicht mehr sichergestellt werden kann. Steht die Stange nicht hervor, so ist das Druckniveau in dem Hydraulikkreislauf so niedrig, dass ein Austreten von Hydraulikflüssigkeit keine wesentliche Gefahr mehr darstellt. Der kritische Druck bei dem die Stange hervorsteht beträgt zwischen 1 und 6 bar. Abhängig von der Federkennlinie, wird die Stange bei einem ersten Druckniveau um ein geringes Längenmaß aus dem Gehäuse hervorzustehen und bei einem weiteren, etwas höheren Druckniveau weiter hervorstehen und erst dann deutlich sichtbar sein. Nicht dargestellt sind Dichtungen an der Stange und optional an dem Kolbenbund, um Leckagen zur Atmosphäre oder Leckagen zwischen den Zylinderkammern zu verhindern.

Die Stange kann so ausgeführt werden, dass sie farbige Markierungen oder Markierungen in Form von Nuten oder Vorsprüngen aufweist, die das Erreichen eines Druckniveaus deutlicher kennzeichnen und ein Anzeigen eines genauen Druckniveaus ermöglichen.

Die Zylinderkammer in dem sich die Stange und die Ringfläche 49 befindet kann auch nicht mit der Druckleitung verbunden sein, sondern mit Luft gefüllt und abgesperrt, zur Tankleitung verbunden oder zu Atmosphäre verbunden sein. Somit würden nur die Kraft aus der zur Druckleitung verbundenen Kreisfläche 48 und die Federkraft auf den Messkolben wirken.

Die Stange des Messkolbens kann auf ein stift- oder kolbenförmiges Anzeigeelement wirken, welches so angeordnet ist, dass nicht die Stange, sondern das von der Stange bewegte Anzeigeelement gegenüber der Bauteiloberfläche hervorstehen kann.

Die Restdruckanzeige 40 ist vorzugsweise immer an eine Druckleitung des Hydraulikkreislaufes des Schlagwerks angeschlossen, in dem der in der Druckleitung 2 herrschende Druck ansteht. Es ist auch möglich zwischen Druckleitung und Restdruckanzeige ein Ventil anzuordnen, welches manuell betätigt werden muss, um die Restdruckanzeige zu aktivieren, was den Vorteil hat, dass der Messkolben während des Betriebs des Schlagwerks, bei dem das Druckniveau im Hydraulikkreislauf oft zwischen dem hohen Pumpendruck und dem niedrigen Tankdruck wechselt, nicht wiederkehrend bewegt wird, sondern nur bei Bedarf. Durch entsprechende Anordnung der Stange des Messkolbens und der Feder kann die Restdruckanzeige auch so ausgeführt werden, dass das Anzeigeelement in druckloser Ruhestellung über die Bauteiloberfläche hervorsteht und sich hinter die Bauteiloberfläche zurückzieht, wenn ein bestimmtes Druckniveau überschritten ist und ein gefahrloses Öffnen des Hydraulikkreislaufes nicht mehr gewährleistet ist.

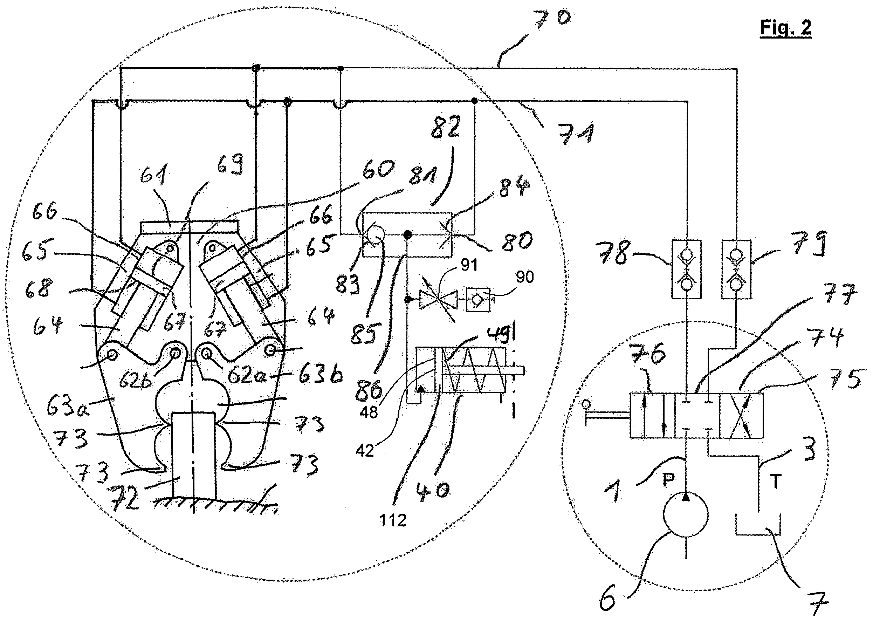

Fig. 2 zeigt in schematischer Darstellung eine konkrete Ausführungsform der Erfindung, die im dargestellten Ausführungsbeispiel an einer Abbruchzange verwirklicht ist.

Abbruchzangen, die auch als Abbruchscheren bezeichnet werden weisen Werkzeugarme auf, von denen mindestens ein Arm mittels zumindest eines Hydraulikzylinders zwischen einer Öffnungs- und einer Schließstellung hin und her schwenkbar ist. Die in Fig. 2 dargestellte Abbruchzange weist ein Gehäuse 60 auf, welches über eine Verbindungsplatte 61 an den Ausleger eines Baggers befestigt werden kann. An dem Gehäuse sind über zwei Drehzapfen 62a, 62b zwei Arme 63a, 63b schwenkbar befestigt. An jedem Arm ist die Kolbenstange 64 eines Hydraulikzylinders 65 gelenkig befestigt, dessen Zylinderrohr 66 gelenkig an dem Gehäuse befestigt ist. Jeder Hydraulikzylinder weist einen an der Kolbenstange befestigten Kolben 67 auf, der den Zylinder in zwei Kammern unterteilt. Auf der Seite der Kolbenstange weist der Kolben eine ringförmige Antriebsfläche 68 und auf der entgegengesetzten Seite eine kreisförmige Antriebsfläche 69 auf. Die formgleichen Flächen der beiden Zylinder sind jeweils über Hydraulikleitungen 70, bzw. 71 miteinander verbunden. Wird den kreisförmigen Kolbenflächen 69 Hydrauliköl zugeführt und kann Hydrauliköl von den ringförmigen Kolbenflächen 68 abfließen, so fahren die Kolbenstangen aus den Zylindern heraus und schwenken die Arme in der Weise, dass sich der Abstand der Arme zueinander verringert und die Arme in die Geschlossenstellung geschwenkt werden. Abzubrechendes Material 72 wie Beton, um welches die Zangenarme positioniert sind, wird durch diese Bewegung zerstört, indem die Zylinderkraft auf die Arme und weiter auf das Material übertragen wird. Die Arme weisen Zähne 73 auf, um eine hohe Flächenpressung an der Kontaktstelle zwischen Arm und Material zu erreichen. Um die Arme wieder in die Offenstellung zu schwenken und den Abstand zwischen den Armen zu vergrößern, wird nun den ringförmigen Kolbenflächen 68 Öl zugeführt und von den kreisförmigen Antriebsflächen 69 abgeführt. Die Zuführung und Abführung von Öl hin und weg von den Kolbenflächen erfolgt über ein Steuerventil 74, welches auf dem Trägergerät angeordnet ist und vom Bediener direkt mechanisch oder über eine hydraulische oder elektrische Steuerung indirekt betätigt werden kann. In einer ersten Schaltstellung 75 werden die kreisförmigen Antriebsflächen mit der von der Pumpe 6 kommenden Leitung 1 verbunden und die ringförmigen Antriebsfläche mit der zum Tank führenden Leitung 3 verbunden, wodurch die Arme in die Geschlossenstellung geschwenkt werden. In der zweiten Schaltstellung 76 werden die ringförmigen Antriebsflächen mit der von der Pumpe 6 kommenden Leitung 1 verbunden und die kreisförmigen Antriebsfläche mit der zum Tank führenden Leitung 3 verbunden, wodurch die Arme in die Offenstellung geschwenkt werden. In einer dritten Schaltstellung 77 des Baggerventils, der Mittelstellung, sind die Verbindungen der Zylinderräume zu der Pumpe und dem Tank gesperrt. In den Leitungen 70 und 71 zwischen der Abbruchzange und dem Baggerventil sind hydraulische Schlauchkupplungen 78, 79 angeordnet, die hier im gekuppelten Zustand dargestellt, in dem die Sperrventile der Schlauchkupplungen geöffnet sind und frei vom Öl durchströmt werden können. Je einer der beiden Eingänge 80, 81 eines Wechselventils 82 ist an jeweils die Leitung 70, bzw. 71 angeschlossen. Das Wechselventil weist zwei gegenüberliegende Ventilsitze 83, 84 auf, zwischen denen ein Ventilelement 85 in Form einer Kugel oder eines Kolbens beweglich angeordnet ist. Je ein hydraulischer Eingang ist an je einen Ventilsitze angeschlossen und ein hydraulischer Ausgang 86 ist zwischen den Ventilsitzen angeordnet. Ist die über das Baggerventil die zu den ringförmigen Antriebsflächen führende Leitung 71 mit der Pumpe verbunden und die zu den kreisförmigen Antriebsflächen führende Leitung 70 zum Tank verbunden, so steht in der Leitung 71 und somit am Eingang 80 ein hoher Druck, am Eingang 81 ein niedriger Druck an. Das Ventilelement 85 wird durch diesen Druckunterschied zwischen den Leitungen in den Sitz 83 gedrückt und verhindert ein Abströmen von Öl von der Leitung 71 in die Leitung 70. Dadurch, dass der Sitz 84 nicht durch das Ventilelement verschlossen ist, ist eine Verbindung zwischen Leitung 71 dem Aushang 86 hergestellt. An dem Ausgang 86 ist eine Restdruckanzeige 40 angeschlossen, deren Messkolben 42 auf der kreisförmigen Fläche 48 mit dem in der Leitung 71, bzw. am Ausgang 86 anstehenden Druck beaufschlagt wird. Die Kammer auf der Seite der ringförmigen Fläche 49 ist mit kompressibler Luft gefüllt und abgesperrt. Eine nicht dargestellte Dichtung auf dem Kolbenbund verhindert ein Überströmen von Öl oder Luft zwischen den Kammern. Das Wechselventil sorgt dafür, dass jeweils der höchste Druck, der in den Zylinderkammern des Hydraulikzylinders herrscht, auf den Messkolben 42 geleitet wird. Auf der Seite der ringförmigen Fläche ist weiterhin eine Feder angeordnet, die den Messkolben in seine Ruhestellung verschiebt, wenn kein oder nur geringer Druck auf der kreisförmigen Fläche ansteht.

Anstelle einer Restdruckanzeige mit einem Wechselventils, können auch zwei Restdruckanzeigen ohne Wechselventil verwendet werden, wobei jeweils eine Restdruckanzeige hydraulisch mit den jeweils flächengleichen Kolbenflächen 68, bzw. 69 verbunden ist.

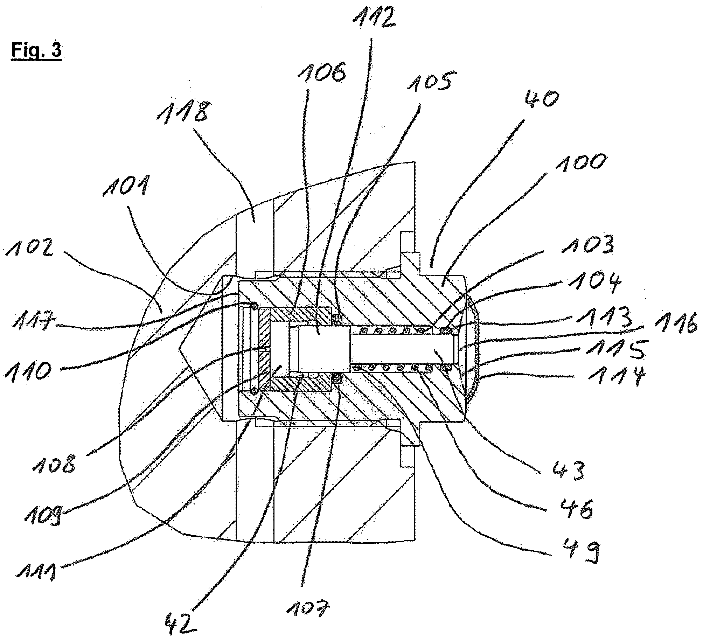

Schließlich wird in Fig. 3 eine konkrete Ausgestaltung einer Restdruckanzeige gezeigt.

Die Restdruckanzeige 40 besteht aus einem Grundkörper 100, welcher über ein Außengewinde in eine mit einem Innengewinde versehene Aufnahmebohrung 101 eingeschraubt ist, wobei sich die Aufnahmebohrung in einem Bauteil 102 des Anbaugerätes, bspw. in dem Zylinderdeckel eines Schlagwerks eines Hydraulikhammers befindet. Der Grundkörper beinhaltet den Messzylinder der eine gestufte Bohrung 103 aufweist, in der sich Dichtungsnuten 104, 105 befinden. In die Bohrung eingesetzt ist eine Dichtungshülse 106, welche die Dichtungsnut 105 in einer Richtung axial begrenzt und ein leichtes Einsetzen und Wechseln der Dichtung 107 ermöglicht, indem die Dichtungshülse aus der Bohrung entfernt wird. Die Dichtungshülse wird über eine mit einer Drosselbohrung 108 versehenen Scheibe 109 und einen Sicherungsring 110 in der Bohrung gegen axiale Verschiebung gesichert. In die Bohrung eingesetzt ist der Messkolben 42, der eine Stange 43, einen Kolbenbund 112 und einen Anschlagbund 111 aufweist. Der Anschlagbund weist einen größeren Durchmesser als der hydraulisch wirksame Kolbenbund 112 des Messkolbens auf und ist vom Außendurchmesser so ausgeführt, dass sich zwischen der Bohrung und dem Anschlagbund ein öldurchlässiger Spalt ergibt und somit eine hydraulische Verbindung zwischen den Räumen beidseits des Anschlagbundes hergestellt ist. Die Dichtung 107 verhindert ein Überströmen von Öl oder Luft zwischen den Räumen beidseits des Kolbenbundes 112. Eine Feder 46 ist in einem mit Luft gefüllten Raum um die Stange angeordnet und übt eine Kraft auf die Ringfläche 49 des Kolbenbundes aus und stellt ihn in die Ruhestellung zurück, in der der Anschlagbund an der Scheibe anliegt. In dieser Position ist die äußere Stirnfläche 116 der Stange bündig mit der konkav ausgeführten äußeren Stirnfläche 115 des Grundkörpers, d.h. die Stange steht in Ruhestellung, in der kein oder nur ein keine Gefährdung darstellender Druck im Hydraulikkreislauf vorhanden ist, nicht über den Grundkörper hervor. In der Dichtungsnut 104 ist ein Schmutzabstreifer 113 eingesetzt, der das Eindringen von Schmutz und Feuchtigkeit in den Führungsspalt zwischen Stange und Grundkörper verhindert. Der Schmutzabstreifer ist aber so ausgeführt, dass er luftdurchlässig ist und einen Druckaufbau innerhalb des mit Luft gefüllten Raumes, in dem sich die Feder befindet, verhindert. An der Stirnseite des Grundkörpers ist eine transparente, elastische Kappe 114 befestigt, die einen weiteren Schutz vor dem Eindringen von Schmutz und Feuchtigkeit darstellt.

Die zum Grund der Bohrung 103 zeigende Stirnseite 117 des Grundkörpers ist über eine Messbohrung 118 an eine (nicht dargestellte) Leitung des Hydraulikkreislaufes angeschlossen, in dem der Druck überwacht werden soll. Über die Drosselbohrung kann der Druck aus der Messbohrung auf den Messkolben wirken und steht somit innerhalb der Dichtungshülse und auf beiden Seiten des Anschlagbundes an. Die hydraulische Kraft, die der Kraft der Feder entgegengerichtet ist, ergibt sich aus der Querschnittsfläche des Kolbenbundes 112 und dem auf dieser Querschnittsfläche anstehenden Drucks. Übersteigt die durch den Druck erzeugte Kraft die Kraft der Feder, so wird der Messkolben in Richtung der Kappe verschoben und der Stößel fährt aus dem Grundkörper heraus, bis der Anschlagbund an der Dichtungshülse zur Anlage kommt. Der Stößel steht somit aus dem Grundkörper hervor, ein deutliches Zeichen, dass in der Messbohrung und in dem mit ihr verbundenen Hydraulikkreislauf unter Druck stehendes Öl vorhanden ist und dass der Hydraulikkreislauf nicht gefahrlos geöffnet werden kann. Sinkt der Druck unterhalb eines bestimmten Druckes, bei dem die Federkraft die hydraulische Kraft übersteigt, so verfährt der Messkolben in entgegengesetzte Richtung, bis die Stange nicht mehr hervor steht, ein deutliches Zeichen, dass kein Druck mehr im Hydraulikkreislauf des Anbaugerätes vorhanden ist, bzw. der Druck auf ein ungefährliches Niveau abgesunken ist. Es sind Ausführungen möglich, bei dem die Federvorspannung bspw. über ein Gewindeelement veränderbar ist und sich somit das Druckniveau, bei dem die Stange hervorsteht einstellen lässt.

Die Feder kann alternativ auch in dem Raum der Dichtungshülse, um den Kolbenbund angeordnet werden, sodass sie zwischen der Ringfläche des Anschlagbundes und der ringförmigen Bohrungsgrundfläche der Dichtungshülse eingespannt ist. In diesem Fall kann die Stange den gleichen Durchmesser wie der Kolbenbund aufweisen.

Wird das Druckmessgerät an Anbaugeräten wie Abbruchzangen, Pulverisierern oder Greifern eingesetzt, die Hydraulikzylinder mit jeweils zwei getrennten Zylinderkammern aufweisen, die getrennt voneinander hydraulisch beaufschlagt werden können, so ist die Restdruckanzeige über ein Wechselventil an die beiden Zylinderkammern des oder der Hydraulikzylinder, die zum Schwenken der Zangenarme, des Pulverisiererarmes oder der Greiferschalen vorgesehen sind, angeschlossen. Das Wechselventil weist zwei gegenüberliegende Ventilsitze auf, zwischen denen ein Ventilelement beweglich angeordnet ist. Je ein hydraulischer Eingang ist an die Ventilsitze angeschlossen und ein hydraulischer Ausgang ist zwischen den Ventilsitzen angeordnet. Das Wechselventil sorgt dafür, dass jeweils der höchste Druck, der in einer der beiden Zylinderkammern herrscht, auf den Messkolben der Restdruckanzeige geleitet wird, aber nicht auf die andere, den niedrigeren Druck aufweisenden Zylinderkammer.

Wird das Druckmessgerät für eine Verdichterplatte, die einen hydraulischen Rotationsmotor aufweist verwendet, so ist die Restdruckanzeige über ein Wechselventil an die beiden hydraulischen Anschlüsse der Verdichterplatte angeschlossen. Das Wechselventil sorgt dafür, dass jeweils der höchste Druck, der in einer der beiden Anschlüsse herrscht, zur Restdruckanzeige geleitet wird.

Weist das Anbaugerät zusätzlich zu den zum Schwenken vorgesehenen Hydraulikzylindern noch weitere Hydraulikkreisläufe zur Versorgung weiterer Antriebe auf, wie beispielsweise einen motorischen Drehantrieb zum Drehen des Anbaugerätes gegenüber dem Ausleger des Trägergerätes, so kann durch Kaskadenförmige Anordnung von Wechselventilen auch der Druck weiterer Hydraulikkreisläufe zur Restdruckanzeige geleitet werden, sodass immer der höchste in einem der Hydraulikkreisläufe des Anbaugerätes herrschende Druck zur Restdruckanzeige geleitet wird.

Zusätzlich kann die Restdruckanzeige oder das Anbaugerät mit einem Entlastungsventil 91 und optional mit einer Schlauchkupplungshälfte 90 ausgestattet werden, die es ermöglicht, dass ein Schlauch an das Anbaugerät angeschlossen werden kann und durch manuelles Öffnen des Entlastungsventils Öl aus dem Anbaugerät in ein Auffanggefäß abgeführt werden kann, um den Druck kontrolliert abzubauen und das austretende Öl umweltgerecht aufzufangen und zu entsorgen. An die Schlauchkupplungshälfte kann auch über einen Messschlauch mit einer passenden Schlauchkupplungshälfte, ein Druckmessgerät beispielsweise in Form eines Manometers angeschlossen werden, um die Höhe dieses Druckes exakt bestimmen zu können, wenn beispielsweise die Restdruckanzeige einen in dem Anbaugerät eingeschlossenen Druck anzeigt.

Es ist auch möglich die Restdruckanzeige mit einer weiteren Anzeigefunktion auszustatten, die anzeigt, wenn der Nennbetriebsdruck des Anbaugerätes überschritten wird. Dazu weist der Stößel der Restdruckanzeige eine weitere Markierung auf der Stange oder dem durch ein Messelement betätigtes Anzeigeelement auf und eine zweite Feder. Die zweite Feder wirkt in gleicher Richtung wie die erste Feder, weist aber eine höhere Federkonstante und Federkraft auf und übt erst dann eine Kraft auf den Messkolben aus, wenn der Messkolben durch ein im Vergleich zum Nennbetriebsdruck niedriges erstes Druckniveau aus der Ruheposition in die Position verschoben worden ist, die anzeigt, dass der anstehende Druck ein gefahrloses Öffnen des Hydraulikkreislaufes nicht mehr zulässt. Übersteigt der im Hydraulikkreislauf anstehende Druck dieses erste Druckniveau, so kommt die zweite Feder zur Anlage an den Messkolben. Erst wenn ein zweites Druckniveau, welches ungefähr dem Nennbetriebsdruck entspricht erreicht wird und die aufgrund des Öldrucks erzeugte Kraft die Summe der Kräfte beider Federn übersteigt, so bewegt sich der Messkolben weiter in Richtung der Bauteiloberfläche, die Stange steht weiter über die äußere Stirnfläche des Grundkörpers hervor, bis eine zweite Markierung sichtbar wird. Das Sichtbarwerden der zweiten Markierung zeigt an, dass der Nennbetriebsdruck überschritten wurde.

Abbruchzangen können verschieden ausgeformte Arme aufweisen, von denen einer oder beide beweglich und von einem oder mehreren Arbeitszylindern angetrieben sind und die um eine oder zwei Achsen geschwenkt werden können. Die Arme können mit Messern zum Schneiden von Blech, Stahlprofilen und Stahl-Armierungen ausgestattet werden und/ oder Bereiche Aufweisen um Stahlprofile zu verformen und/ oder Zähne oder Zahnleisten aufweisen um Beton oder Mauerwerk zu brechen.

Pulverisierer sind ähnlich aufgebaut wie Abbruchzangen, jedoch sind die Arme an den zueinander gerichteten Arbeitsflächen breiter ausgeführt um Beton oder Mauerwerk zu Brechen und um Armierungen von dem die Armierung umgebenden Baustoff wie Beton zu trennen.

Greifer sind ähnlich aufgebaut wie Abbruchzangen, weisen jedoch zwei bewegliche Greiferschalen auf, die eine gitterartige Struktur aufweisen, sodass größerer Mengen Baustoff aufgenommen werden können und kleine Baustoffteilchen durch die Löcher der gitterartigen Struktur fallen können um die Baustoffe ihrer Größe nach zu sortieren. An der Spitze der Greiferschalen, die sich bei geschlossenem Greifer berühren oder fast berühren sind Greiferleisten angeordnet, um auch kleine und dünne Baustoffe wie Holzbretter gut greifen zu können.

Brecherlöffel weisen einen Trichterförmigen Laderaum auf, in den Baustoff eingefüllt werden kann. Innerhalb des Trichters sind zwei zueinander bewegliche Brecherbacken angeordnet, die einen sich verjüngenden Spalt bilden. Zumindest eine Brecherbacke ist schwenkbar gelagert und kann über einen Hydraulikzylinder oder einen über einen hydraulischen Drehmotor angetriebenen Exzenter auf die andere Brecherbacke hin und von ihr weg bewegt werden. Dadurch wird das in dem Spalt befindliche Material gebrochen und wandert durch den Brecherlöffel, bis es zerkleinert aus ihm austritt. Anstelle von Brecherbacken können am Ende des trichterförmigen Laderaumes auch eine oder mehrere rotierende Trommeln angeordnet sein, die Messer oder Meißel aufweisen, um das in dem Ladetrichter befindliche Material zu zerkleinern.

## Patentansprüche

1. Hydraulisches Anbaugerät mit einem Hydraulikkreislauf, das ein Bau- oder Abbruchwerkzeug, insbesondere ein Hydraulikhammer, eine Zange, eine Stahlschere, ein Pulverisierer, ein Greifer, ein Brecherlöffel oder eine Verdichterplatte ist, das mechanisch mit einem Trägergerät und hydraulisch mit dem Hydrauliksystem des Trägergerätes verbindbar ist,
**gekennzeichnet durch**
eine Restdruckanzeige (40), die direkt mit dem Hydraulikkreislauf des Anbaugerätes lösbar oder unlösbar verbunden ist, so dass die Restdruckanzeige (40) unabhängig von der Trägergeräteinstallation arbeitet.

2. Hydraulisches Anbaugerät nach Anspruch 1, **dadurch gekennzeichnet, dass** die Restdruckanzeige (40) in das Anbaugerät integriert ist und nur eine Außenfläche der Restdruckanzeige (40), an der ein Anzeigeelement angeordnet ist, nach außen zeigt.

3. Hydraulisches Anbaugerät nach einen der Ansprüche 1 oder 2 **dadurch gekennzeichnet, dass** die Restdruckanzeige (40) einen Grundkörper (100) besitzt, der über ein Außengewinde in eine mit einem Innengewinde versehene Aufnahmebohrung (101) eingeschraubt ist, wobei die Aufnahmebohrung (101) in einem Bauteil (102) des hydraulischen Anbaugerätes eingebracht ist.

4. Hydraulisches Anbaugerät nach Anspruch 3, **dadurch gekennzeichnet, dass** die Restdruckanzeige (40) einen Messkolben (42) mit einer Stange (43) aufweist, der Messkolben (42) in einer Bohrung (103) des Grundkörpers (100) angeordnet ist und gegen die Kraft einer Feder (46) längsaxial innerhalb der Bohrung (103) beweglich ist.

5. Hydraulisches Anbaugerät nach Anspruch 4, **dadurch gekennzeichnet, dass** die Bohrung (103) über eine Messbohrung (118) mit dem Hydraulikkreislauf des Anbaugerätes verbunden ist.

6. Hydraulisches Anbaugerät nach einem der Ansprüche 4 bis 5, **dadurch gekennzeichnet, dass** der Druck des Hydraulikkreislaufes auf mindestens eine Fläche (48, 49) des Messkolbens (42) wirkt, um eine der Kraft der Feder (46) entgegengerichtete Kraft zu erzeugen.

7. Hydraulisches Anbaugerät nach einen der Ansprüche 4 bis 6, **dadurch gekennzeichnet, dass** die Stange (43) bei zunehmender Druckbeaufschlagung der Fläche (48, 49) des Messkolbens (42) weiter aus dem Grundkörper (100) hervorsteht und bei Verringerung des Drucks in den Grundkörper (100) zurückfährt.

8. Hydraulisches Anbaugerät nach einem der Ansprüche 4 bis 7, **dadurch gekennzeichnet, dass** der Messkolben (42) einen Anschlagbund (111) aufweist, der den Verschiebeweg des Messkolbens (42) in zumindest einer Richtung begrenzt.

9. Hydraulisches Anbaugerät nach einem der Ansprüche 1 bis 8, **dadurch gekennzeichnet, dass** die Restdruckanzeige (40) in dem Schlagwerkgehäuse, vorzugsweise in dem Zylinderdeckel eines Hydraulikhammers eingebaut ist.

## Claims

1. A hydraulic attachment having a hydraulic circuit, the attachment being a construction or demolition tool, in particular a hydraulic breaker, demolition pincers, scrap pincers, a pulverizer, a grab, a crusher bucket or a compactor, which can be mechanically connected to a support device and hydraulically connected to the hydraulic system of the support device,
**characterized by**
a residual pressure indicator (40), which is directly connected to the hydraulic circuit of the attachment in a detachable or non-detachable manner, so that the residual pressure indicator (40) operates independently of the support device installation.

2. The hydraulic attachment according claim 1, **characterized in that** the residual pressure indicator (40) is integrated into the attachment and only an outer surface of the residual pressure indicator (40), on which an indicating element is arranged, is visible from the outside.

3. The hydraulic attachment according claims 1 or 2, **characterized in that** the residual pressure indicator (40) has a main body (100), which is screwed by means of an external thread into a location hole (101) provided with an internal thread, wherein the location hole is introduced into a component (102) of the hydraulic attachment.

4. The hydraulic attachment according claim 3, **characterized in that** the residual pressure indicator (40) has a measuring piston (42) having a rod (43), the measuring piston (42) is arranged in a hole (103) in the main body (100) and can move along the longitudinal axis within the hole against the force of a spring (46).

5. The hydraulic attachment according claim 4, **characterized in that** the hole (103) is connected to the hydraulic circuit of the attachment by a measuring hole (118).

6. The hydraulic attachment according one of claims 4 to 5, **characterized in that** the pressure in the hydraulic circuit acts on at least one surface (48, 49) of the measuring piston (42) in order to produce a force counter to the force of the spring (46).

7. The hydraulic attachment according one of claims 4 to 6, **characterized in that** the rod (43) protrudes further out of the main body (100) with increasing pressurization of the surface (48, 49) of the measuring piston (42) and retracts into the main body (100) when the pressure is reduced.

8. The hydraulic attachment according one of claims 4 to 7, **characterized in that** the measuring piston (42) has a stop collar (111), which limits the displacement travel of the measuring piston (42) in at least one direction.

9. The hydraulic attachment according one of claims 1 to 9, **characterized in that** the residual pressure indicator (40) is built into the impact mechanism housing, preferably into the cylinder head of a hydraulic breaker.

## Revendications

1. Outil porté hydraulique comprenant un circuit hydraulique, lequel est un outil de construction ou de démolition, en particulier un marteau hydraulique, une pince, une cisaille pour acier, un pulvérisateur, un grappin, un godet de broyeur ou une plaque de compactage, lequel peut être relié de manière mécanique à un appareil porteur et de manière hydraulique au système hydraulique de l'appareil porteur,
**caractérisé par** un indicateur de pression résiduelle (40) qui est relié directement de manière amovible ou inamovible au circuit hydraulique de l'outil porté de sorte que ledit indicateur de pression résiduelle (40) travaille indépendamment de l'installation de l'appareil porteur.

2. Outil porté hydraulique selon la revendication 1, **caractérisé par le fait que** ledit indicateur de pression résiduelle (40) est intégré à l'outil porté et que seulement une surface extérieure de l'indicateur de pression résiduelle (40), sur laquelle est disposé un élément d'affichage, montre vers l'extérieur.

3. Outil porté hydraulique selon l'une quelconque des revendications 1 ou 2, **caractérisé par le fait que** l'indicateur de pression résiduelle (40) possède un corps de base (100) qui est vissé par un filet extérieur dans un trou de logement (101) pourvu d'un filet intérieur, dans lequel ledit trou de logement (101) est ménagé dans un composant (102) de l'outil porté hydraulique.

4. Outil porté hydraulique selon la revendication 3, **caractérisé par le fait que** l'indicateur de pression résiduelle (40) présente un piston de mesure (42) ayant une tige (43), ledit piston de mesure (42) est disposé dans un trou (103) dudit corps de base (100) et est déplaçable dans la direction de l'axe longitudinal à l'intérieur du trou (103) contre la force d'un ressort (46).

5. Outil porté hydraulique selon la revendication 4, **caractérisé par le fait que** le trou (103) est en communication avec le circuit hydraulique de l'outil porté via un trou de mesure (118).

6. Outil porté hydraulique selon l'une quelconque des revendications 4 à 5, **caractérisé par le fait que** la pression du circuit hydraulique agit sur au moins une surface (48, 49) du piston de mesure (42) afin de générer une force dirigée en sens inverse de la force du ressort (46).

7. Outil porté hydraulique selon l'une quelconque des revendications 4 à 6, **caractérisé par le fait que**, lorsque la mise en pression de la surface (48, 49) du piston de mesure (42) augmente, ladite tige (43) est plus en saillie du corps de base (100) et que, lorsque la pression diminue, elle rentre dans le corps de base (100).

8. Outil porté hydraulique selon l'une quelconque des revendications 4 à 7, **caractérisé par le fait que** le piston de mesure (42) présente une collerette de butée (111) qui limite la course de déplacement du piston de mesure (42) dans au moins une direction.

9. Outil porté hydraulique selon l'une quelconque des revendications 1 à 8, **caractérisé par le fait que** l'indicateur de pression résiduelle (40) est incorporé dans le boîtier du mécanisme de percussion, de préférence dans le chapeau de cylindre d'un marteau hydraulique.
